# EUROPEAN PATENT APPLICATION

(11) **EP 4 303 616 A1**
(43) Date of publication of application: **10.01.2024**
(21) Application number: 22762942.5
(22) Date of filing: 14.02.2022
(51) Int. Cl.: G01S 7/497, G01S 17/931, B60S 1/62

(54) **SENSOR SYSTEM**

(30) Priority: 05.03.2021 JP 2021035719
(71) Applicant: KOITO MANUFACTURING CO., LTD., Minato-ku, Tokyo, 108-8711 (JP)
(72) Inventor: NAMBA Takanori, Shizuoka-shi, Shizuoka 424-8764 (JP); SATO Masaaki, Shizuoka-shi, Shizuoka 424-8764 (JP); MOCHIZUKI Kiyotaka, Shizuoka-shi, Shizuoka 424-8764 (JP)
(74) Representative: Cabinet Beau de Loménie
(86) International application number: PCT/JP2022/005621
(87) International publication number: WO 2022/185885

(57) **Abstract**

A sensor system (1) includes a LiDAR (30) having a point group information output unit (35) that outputs point group information including position information on an object and distance information to the object, and a dirt determination unit (26). A detection range is divided into a first region and a second region. The dirt determination unit (26) is configured to determine, for each region, that dirt is attached to the region when a number of pieces of the point group information that continues to be in an abnormal state, where the distance information cannot be normally acquired at the same time, for a predetermined time or longer reaches a predetermined number or more, and when the predetermined number for determining that dirt is attached in the first region is defined as a first threshold value and the predetermined number for determining that dirt is attached in the second region is defined as a second threshold value, the first threshold value is different from the second threshold value.

## Description

### TECHNICAL FIELD

The present disclosure relates to a sensor system.

### BACKGROUND ART

A cleaner system equipped with a cleaner is known from Patent Literature 1, and the like.

### CITATION LIST

### PATENT LITERATURE

Patent Literature 1: JP2001-171491A

### SUMMARY OF INVENTION

### TECHNICAL PROBLEM

It has been recognized that a detection range of a LiDAR includes a region such as a road surface and a sky where a distance to an object is unlikely to change even over time and a region such as a vehicle, a pedestrian, and a building where a distance to an object is more likely to change over time.

For example, in the region where the distance is unlikely to change, even if there are few points where distance information cannot be acquired, it is easy to immediately determine that dirt has occurred in the region. However, in the region where the distance information changes frequently, it is difficult to determine that dirt has occurred in the corresponding region just because there is a point where the distance information can be acquired only a little. For this reason, in the case where it is configured to determine that dirt is attached when the number of point groups for which distance information cannot be acquired reaches a predetermined number, even for a region where dirt can be determined with a small number of abnormal points, it is possible to determine dirt only after waiting for the number of abnormal points to increase to a predetermined number set for the region where it is difficult to determine dirt.

Accordingly, the present disclosure provides a sensor system capable of quickly determining dirt in a region where dirt can be immediately determined.

### SOLUTION TO PROBLEM

A sensor system according to an aspect of the present disclosure includes:
a LiDAR including a light emitting unit configured to emit light to a detection range via a transmissive part configured to transmit light, a light receiving unit configured to receive light emitted from the light emitting unit and reflected by hitting at an object, and a point group information output unit configured to output point group information including position information on the object and distance information to the object, based on the light received by the light receiving unit, and
a dirt determination unit configured to detect dirt attached to the transmissive part, based on the point group information,
wherein the detection range to which the light emitting unit emits light is divided into a plurality of regions including a first region and a second region different from the first region,
wherein the dirt determination unit is configured to determine, for each region, that dirt is attached to the region when a number of pieces of the point group information that continues to be in an abnormal state, where the distance information cannot be normally acquired at the same time, for a predetermined time or longer reaches a predetermined number or more, and
wherein when the predetermined number for determining that dirt is attached in the first region is defined as a first threshold value and the predetermined number for determining that dirt is attached in the second region is defined as a second threshold value, the first threshold value is different from the second threshold value.

### BRIEF DESCRIPTION OF DRAWINGS

FIG. 1 is a system block diagram of a sensor system.
FIG. 2 is a cross-sectional view of a LiDAR.
FIG. 3 is a schematic view showing region division in a first embodiment of the present disclosure.
FIG. 4 is a schematic diagram for illustrating an output situation of point group information and a method for determining dirt attachment.
FIG. 5 is a schematic diagram showing region division in another example of the present disclosure.
FIG. 6 is a schematic view showing region division in a second embodiment of the present disclosure.

### DESCRIPTION OF EMBODIMENTS

Hereinafter, embodiments of the present disclosure will be described with reference to the drawings. Note that, for convenience of description, the description of members having the same reference numerals as the members already described in the description of the embodiments will be omitted. In addition, for convenience of description, the dimension of each member shown in the drawings may be different from the dimension of each actual member.

In addition, in the description of the present embodiment, for convenience of description, "left and right direction", "front and rear direction", and "upper and lower direction" are appropriately referred to. These directions are relative directions set with respect to the vehicle. Here, "upper and lower direction" is a direction including "upper direction" and "lower direction". "Front and rear direction" is a direction including "front direction" and "rear direction". The "left and right direction" is a direction including "left direction" and "right direction".

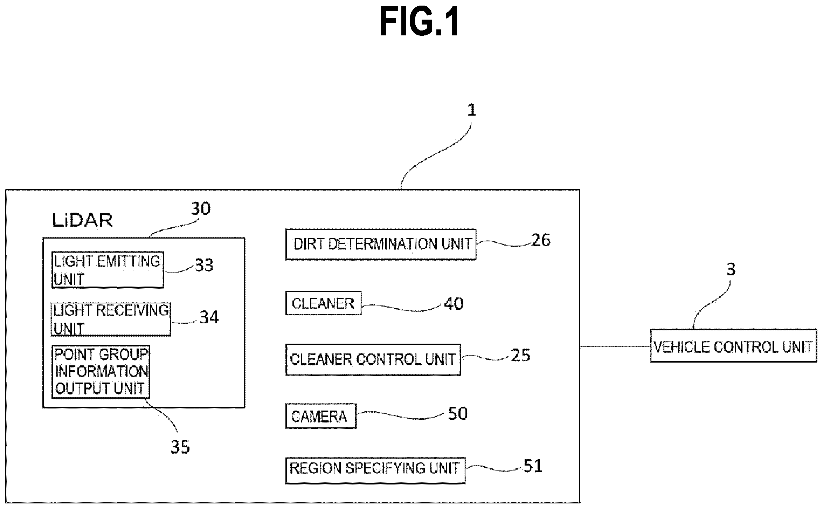

FIG. 1 is a system block diagram of a sensor system 1 according to a first embodiment of the present disclosure. The sensor system 1 of the present embodiment is mounted on a vehicle having a vehicle control unit 3. As shown in FIG. 1, the sensor system 1 includes a LiDAR 30 (Light Detection and Ranging or Laser Imaging Detection and Ranging) 30 (an example of a sensor) and a dirt determination unit 26. The LiDAR 30 is a sensor that can acquire external information.

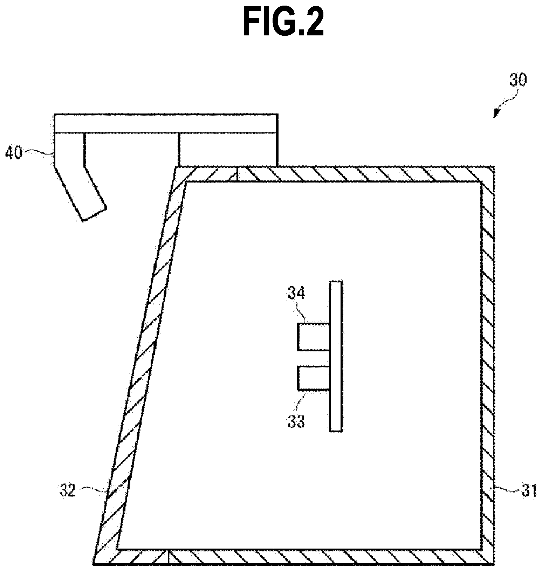

FIG. 2 is a sectional view of the LiDAR 30. As shown in FIG. 2, the LiDAR 30 has a housing 31 having an opening and an outer lens 32 for covering the opening of the housing 31. In a space formed by the housing 31 and the outer lens 32, a light emitting unit 33 and a light receiving unit 34 are provided. The light receiving unit 34 detects light emitted from the light emitting unit 33 and reflected by a detection target. At this time, the light receiving unit 34 receives reflected light from the detection target via the outer lens 32. The light receiving unit 34 outputs detection information corresponding to the detected light.

The light emitting unit 33 emits light within a detection range defined ahead of the LiDAR 30. The light emitting unit 33 sequentially emits light toward a plurality of points within the detection range. The light emitted from the light emitting unit 33 and reflected by an object within the detection range passes through the outer lens 32 and is incident onto the light receiving unit 34. The light receiving unit 34 outputs a detection result corresponding to detection of the reflected light to a point group information output unit 35.

The point group information output unit 35 (refer to FIG. 1) outputs point group information including position information and distance information with respect to the plurality of points within the detection range.

The position information is information indicating at which point (called a detection point) in the detection range the light emitted from the light emitting unit 33 and reflected toward the light receiving unit 34 was reflected, i.e., a position of the detection point.

For example, it is assumed that the detection range is previously divided into a matrix shape of 10000×10000, or the like, the light emitting unit 33 is configured to emit light to points within the divided areas, and the light emitting unit 33 is configured to emit sequentially light from a point located on the right upper side of the plurality of points toward a point located on the left lower side. In this case, the order in which the light was received includes position information about which point the light was emitted toward. In this case, the point group information output unit 35 outputs the distance information in order, and the order of outputting the distance information becomes position information.

Alternatively, a configuration may be possible in which the light emitting unit 33 includes a light source and a mirror capable of changing a direction, and a direction in which the light emitting unit 33 emits light can be specified by a direction of the mirror. In this case, a direction in which the light reflected by the mirror travels becomes position information. The position information in this case can express the direction in which the light travels by a horizontal angle and a vertical angle. The point group information output unit 35 outputs point group information consisting of position information on a detection point based on a direction of the mirror of the light emitting unit 33, and distance information.

The distance information is information indicating a distance between the light receiving unit 34 and an object present at the detection point. The distance information is calculated based on a light flux and a time after the light emitting unit 33 emits light toward the detection point until the light receiving unit 34 receives reflected light from the detection point.

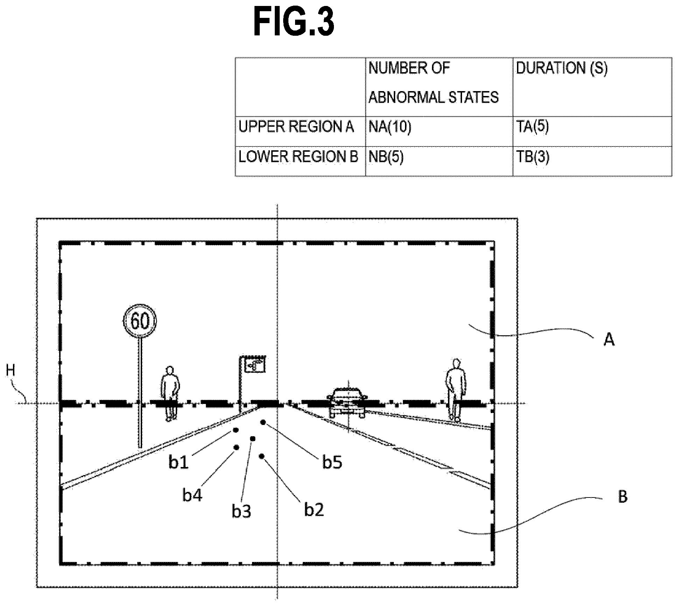

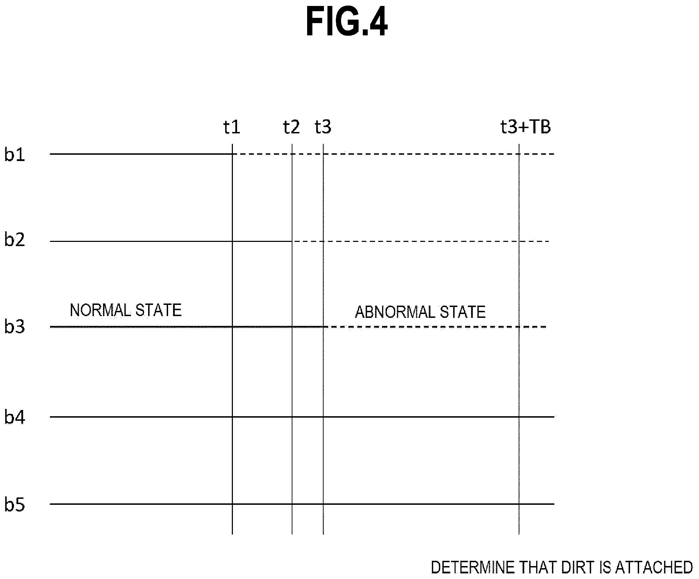

The dirt determination unit 26 detects dirt attached to the outer lens 32, based on the point group information including the position information and the distance information. A dirt determination method by the dirt determination unit 26 will be described with reference to FIGS. 3 and 4.

FIG. 3 is a schematic view showing a region division in the present embodiment. FIG. 3 shows the set region superimposed on the landscape of the detection range. As shown in FIG. 3, in the present embodiment, the detection range is divided into two in the vertical direction. The detection range is divided into two regions of a region where a vertical angle exceeds 0 degree (including and above a horizontal line H in FIG. 3) is an upper region A and a region where the vertical angle is equal to or less than 0 degree (below the horizontal line H in FIG. 3) is a lower region B. That is, it can be said that the second region (lower region B) is a region corresponding to the road surface, and the first region (upper region A) is a region other than the second region within the detection range of the LiDAR 30. Alternatively, it can also be said that the predetermined range (detection range) is divided into two regions of a far region (upper region A) and a near region (lower region B) closer than the far region in an inward direction.

In the present embodiment, the dirt determination unit 26 is configured to determine, for each region, that dirt is attached to the region when a number of pieces of the point group information that continues to be in an abnormal state, where distance information cannot be normally acquired at the same time, for a predetermined time or longer reaches a predetermined number or more. This will be described in detail with reference to FIG. 4.

FIG. 4 is a schematic diagram for illustrating an output situation of point group information and a method for determining dirt attachment. FIG. 4 shows that distance information of points within the detection range acquired from the LiDAR 30 is output. A horizontal axis in FIG. 4 represents time. A line b1 indicates the output situation of the distance information on a point b1 (refer to FIG. 3) in the lower region B. A period in which this line is drawn as a solid line is a period in a normal state in which the LiDAR 30 normally outputs the distance information. A period in which this line is drawn as a broken line is a period of an abnormal state in which abnormal distance information is output from the LiDAR 30. Note that the description 'abnormal distance information is output' means that the distance information is not output from the LiDAR 30, an error is output, or the like. When a distance from the LiDAR 30 to an object is shorter than a threshold value or when the reflection intensity is higher than a threshold value, the point group information output unit 35 does not output the distance information or outputs an error.

In FIG. 4, at time t1, the point group information on the point b1 enters an abnormal state, and the abnormal state continues thereafter. In addition, at time t2 after time t1, the point group information on a point b2 enters an abnormal state, and the abnormal state continues thereafter. Further, at time t3 after time t2, the point group information on a point b3 enters an abnormal state, and the abnormal state continues thereafter.

Here, the dirt determination unit 26 is configured to determine that dirt is attached to the region, for example, when the number of pieces of point group information that continues to be in the abnormal state for T seconds or longer reaches N (three, in this case). That is, with respect to the case shown in FIG. 4, it is determined that dirt is attached to the outer lens 32 in the lower region B after time t3+T seconds at which the number of pieces of point group information that continues to be in the abnormal state for T seconds or longer becomes three.

Here, in the sensor system 1 of the present embodiment, when the predetermined number for determining that dirt is attached in the upper region A is defined as a first threshold value NA and the predetermined number for determining that dirt is attached in the lower region B is defined as a second threshold value NB, the first threshold NA is different from the second threshold NB. As shown in the table on the right upper side of FIG. 3, the first threshold value NA for the upper region A is set to 10, and the second threshold value NB for the lower region B is set to 5. That is, the first threshold NA is larger than the second threshold NB.

For this reason, in the upper region A, if the number of pieces of point group information that continues to be in the abnormal state for a predetermined time or longer is less than, for example, 10 or more, it is not determined that dirt is attached to the outer lens 32 in the upper region A. On the other hand, in the lower region B, when the number of pieces of point group information that continues to be in an abnormal state for a predetermined time or longer becomes, for example, 5 or more, it is determined that dirt is attached to the outer lens 32 of the lower region B. That is, in the lower region B, it is quickly determined that the dirt is attached, even when the number of pieces of point group information that continues to be in the abnormal state for a predetermined time or longer is small.

Here, various objects such as other vehicles, pedestrians, buildings, trees, and the sky appear in the upper region A above the horizontal line H. When a host vehicle travels, positions of these objects change and they either exist or do not exist. In addition, the reflectance of these objects varies. For this reason, when the host vehicle travels, the position where light is reflected and the intensity of the reflected light are likely to change in the above region A. In such an upper region A, it is difficult to immediately determine that dirt is attached, unless the number of pieces of point group information that continues to be in an abnormal state for a predetermined time or longer is large to some extent.

On the other hand, a road surface exists in the region B below the horizontal line H. The road surface has a uniform surface property. In addition, a region where the road surface exists is unlikely to change even when the vehicle travels. For this reason, even when the host vehicle is traveling, in the lower region B, the position where the light is reflected and the intensity of the reflected light are unlikely to change. For this reason, in the lower region B, it is easy to determine that dirt is attached, even when the number of pieces of point group information that continues to be in an abnormal state for a predetermined time or longer is small.

In this way, according to the sensor system 1 of the present embodiment, since the first threshold value NA and the second threshold value NB are made different, by setting a threshold value suitable for each region, while maintaining the determination accuracy of attachment of dirt, it is possible to increase the determination speed in the region where attachment of dirt can be quickly determined.

Note that in the above description, it has been described that the number of pieces of point group information that continues to be in an abnormal state for a predetermined time or longer, which is used as the threshold value for determining that dirt is attached, is made different in the first region and the second region. However, the present disclosure is not limited thereto. A duration of the point group information in an abnormal state, which is used as the threshold value for determining that dirt is attached, may be made different in the first region and the second region.

That is, the dirt determination unit 26 may be configured to determine, for each region, that dirt is attached to the region when a number of pieces of the point group information that continues to be in an abnormal state, where the distance information cannot be normally acquired at the same time, for a predetermined time or longer reaches a predetermined number or more, and when the predetermined number for determining that dirt is attached in the first region is defined as a third threshold value and the predetermined number for determining that dirt is attached in the second region is defined as a fourth threshold value, the third threshold value may be different from the fourth threshold value.

For example, as shown in FIG. 3, a duration TA (third threshold value) of the upper region A may be set to 5 seconds, and a duration TB (fourth threshold value) of the lower region B may be set to 3 seconds. In the upper region A, when the vehicle travels, the position where the light is reflected and the intensity of the reflected light are likely to change. In such an upper region A, it is difficult to immediately determine that dirt is attached, unless the duration of the abnormal state is long to some extent. On the other hand, in the lower region B, even when the host vehicle travels, the position where the light is reflected and the intensity of the reflected light are unlikely to change. In such a lower region B, even when the duration of the abnormal state is short, it is easy to immediately determine that dirt is attached.

Note that the numbers of abnormal states NA and NB may be made different and the durations TA and TB may be made different. In addition, the numbers of abnormal states NA and NB may be made different, and the durations TA and TB may be made the same. Alternatively, the numbers of abnormal states NA and NB may be made the same, and the durations TA and TB may be made different.

In addition, the sensor system 1 includes a cleaner 40 that cleans the LiDAR 30. The cleaner 40 ejects cleaning liquid onto the outer lens 32 to remove dirt such as mud or dust attached to the outer lens 32. As the cleaning liquid, water, water including a cleaning component, or the like can be used.

Note that the dirt determination unit 26 detects whether dirt is attached to the outer lens 32, for each region. When it is determined that dirt is attached in the upper region A, for example, the dirt determination unit 26 outputs the corresponding information to the cleaner control unit 25, and the cleaner control unit 25 drives the cleaner 40 to clean the upper region A.

Further, in the sensor system 1 of the present embodiment, the cleaner control unit 25 is preferably configured to allow actuation of the cleaner 40 when a signal, which indicates that the vehicle is stationary, is acquired from the vehicle control unit 3. While the cleaner 40 is actuated to eject the cleaning liquid, the LiDAR 30 cannot perform normal detection. For this reason, it is preferable to actuate the cleaner 40 while the vehicle is stationary. In addition, since the traveling wind does not act while the vehicle is stationary, the cleaning liquid is likely to remain on the outer lens 32. However, according to the sensor system 1 of the present embodiment, the cleaner 40 is not actuated for a predetermined time during which the cleaning liquid remains, so the wasteful consumption of the cleaning liquid can be suppressed.

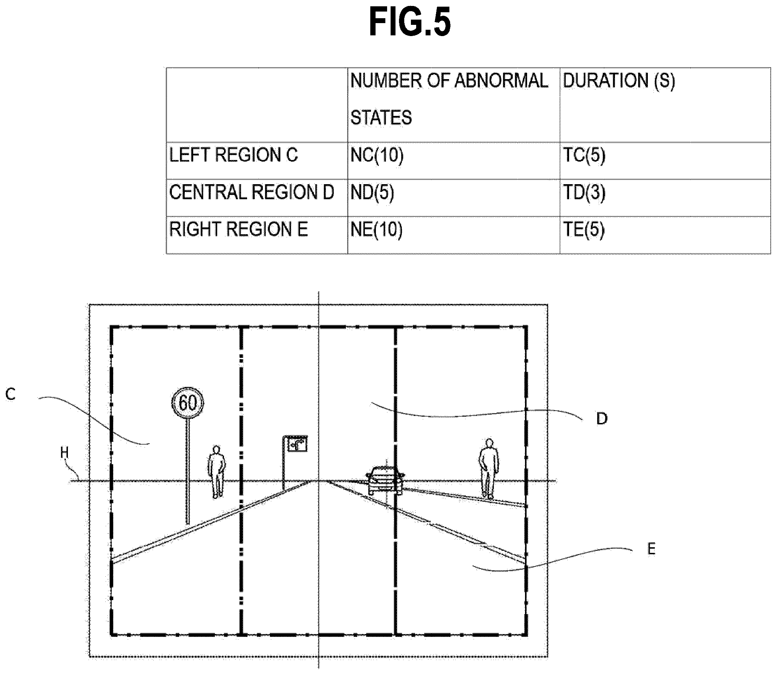

Note that, in the first embodiment described above, an example in which the detection range is divided into the upper region A and the lower region B has been described, but the present disclosure is not limited thereto. As shown in FIG. 5, the predetermined range may be divided into three regions of a left region C, a central region D (left-right central region), and a right region E in the left and right direction.

In this case, as shown in the table on the right upper side of FIG. 5, when the numbers of point group information that continues to be in an abnormal state for determining that dirt is attached in the left region C and the right region E are defined as first threshold values NC and NE and the number of pieces of point group information that continues to be in an abnormal state for determining that dirt is attached in the central region D is defined as a second threshold value ND, the first threshold values NC and NE are different from the second threshold value ND. Here, the first threshold values NC and NE are set to 10, and the second threshold value ND is set to 5.

In addition, when the duration for determining that dirt is attached in the left region C and the right region E is defined as third threshold values TC and TE, and the duration for determining that dirt is attached in the central region D is defined as a fourth threshold value TD, the third threshold values TC and TE are different from the fourth threshold value TD. Here, the third threshold values TC and TE are set to 5 seconds, and the fourth threshold value TD is set to 3 seconds.

Note that, similarly to the first embodiment described above, the numbers of abnormal states NC(NE) and ND may be made different, and the durations TC(TE) and TD may be made different. In addition, the numbers of abnormal states NC(NE) and ND may be made different, and the durations TC(TE) and TD may be made the same. Alternatively, the numbers of abnormal states NC(NE) and ND may be made the same, and the durations TC(TE) and TD may be made different.

In the left region C and the right region E, various objects such as pedestrians, buildings, trees, and sky appear. When a host vehicle travels, positions of these objects change and they either exist or do not exist. In addition, the reflectance of these objects varies. For this reason, when the host vehicle travels, the position where the light is reflected and the intensity of the reflected light are likely to change in the left region C and the right region E. In such left region C and right region E, it is difficult to immediately determine that dirt is attached, unless the number of pieces of point group information in an abnormal state is large to some extent.

On the other hand, a road surface exists in the central region D. The road surface has a uniform surface property. In addition, a region where the road surface exists is unlikely to change even when the vehicle travels. For this reason, even when the host vehicle is traveling, in the central region D, the position where light is reflected and the intensity of the reflected light are unlikely to change. For this reason, in the central region D, it is easy to determine that dirt is attached, even when the number of pieces of point group information in an abnormal state is small.

In this way, since the first threshold values NC and NE and the second threshold value ND are made different, by setting a threshold value suitable for each region, while maintaining the determination accuracy of attachment of dirt, it is possible to increase the determination speed in the region where attachment of dirt can be quickly determined.

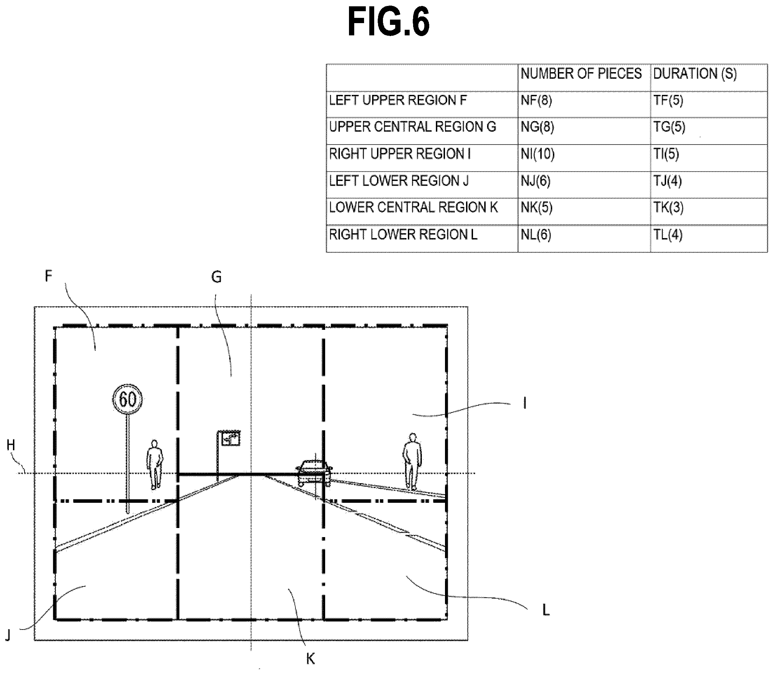

Note that the division of the detection range is not limited to the examples shown in FIGS. 3 and 5. FIG. 6 is a schematic view showing region division of the detection range according to a second embodiment of the present disclosure. As shown in FIG. 6, the detection range may be divided into a total of six regions of two divisions in the vertical direction and three divisions in the left and right direction. Note that regarding the region division, it is not necessary to equally divide the detection range, and areas of the respective regions may be different from each other, as shown in FIG. 6.

In the example shown in FIG. 6, the number of pieces of point group information that continues to be in an abnormal state for determining that dirt is attached is different in the lower central region K where the road surface exists and the right upper region I where the sky exists. For example, as shown in the table on the right upper side of FIG. 6, when the number of pieces of point group information that continues to be in an abnormal state for determining that dirt is attached in the right upper region I is defined as a first threshold value NI and the number of pieces of point group information that continues to be in an abnormal state for determining that dirt is attached in the lower central region K is defined as a second threshold value NK, the first threshold value NI is different from the second threshold value NK. Here, the first threshold value NI is set to 10 and the second threshold value NK is set to 5.

In addition, when the duration for determining that dirt is attached in the right upper region I is defined as a third threshold value TI and the duration for determining that dirt is attached in the lower central region K is defined as a fourth threshold value TK, the third threshold value TI is different from the fourth threshold value NK. Here, the third threshold value TI is set to 5 seconds, and the fourth threshold value TK is set to 3 seconds.

Even with such a region division, since the determination criterion for dirt attachment suitable for each region is set, it is possible to increase the determination speed while maintaining the determination accuracy.

Note that, in the embodiments described above, the region division is stored in advance in the memory mounted on the sensor system 1, and the dirt determination unit 26 divides the detection range according to the predetermined definition. However, the present disclosure is not limited thereto.

As shown in FIG. 1, when the sensor system 1 includes a camera 50 whose angle of view includes a range including the detection range of the LiDAR 30, and a region specifying unit 51 for specifying at least the first region and the second region based on information acquired by the camera 50, it may be configured so that the detection range is dynamically set using the same.

For example, the region specifying unit 51 specifies a road surface region occupied by a road surface in the detection range based on an image acquired by the camera 50, and outputs the specified road surface region to the dirt determination unit 26. The dirt determination unit 26 may be configured to set the number of pieces of point group information that continues to be in an abnormal state for determining that dirt is attached and/or the duration for determining that dirt is attached to be different in the road surface region and other regions, and to determine the attachment of dirt.

The cleaner control unit 25, the dirt determination unit 26, the point group information output unit 35, and the region specifying unit 51 having the various functions described so far may be realized by a dedicated integrated circuit capable of executing the above computer program, such as a microcontroller, an ASIC and an FPGA. Alternatively, the cleaner control unit 25, the dirt determination unit 26, the point group information output unit 35, and the region specifying unit 51 may be realized by a general-purpose microprocessor that operates in cooperation with a general-purpose memory. As the general-purpose microprocessor, a CPU, an MPU, and a GPU may be exemplified. As the general-purpose memory, a ROM and a RAM may be exemplified.

Although the embodiments of the present disclosure have been described, it is obvious that the technical scope of the present Invention should not be construed as being limited by the description of the present embodiments. It is understood by one skilled in the art that the present embodiments are just examples and the embodiments can be variously changed within the scope of the invention described in the claims. The technical scope of the present invention should be determined based on the scope of the invention described in the claims and the equivalent scope thereof.

Note that, in the above embodiments, the example in which the sensor system 1 is mounted on the vehicle has been described, but the present disclosure is not limited thereto.

The present disclosure may also be applied to the sensor system 1 having a LiDAR attached to an installation installed on the ground, such as a traffic light and a streetlamp, and configured to acquire traffic information such as the speed and number of vehicles passing through the location. When the LiDAR is fixed to the installation, since the position of the horizon does not move, there is no need to dynamically vary the region division, and therefore, the configuration can be made simpler.

The present application is based on Japanese Patent Application No. 2021-035719 filed on March 5, 2021, the contents of which are incorporated herein by reference.

## Claims

1. A sensor system comprising:
a LiDAR comprising a light emitting unit configured to emit light to a detection range via a transmissive part configured to transmit light, a light receiving unit configured to receive light emitted from the light emitting unit and reflected by hitting at an object, and a point group information output unit configured to output point group information comprising position information on the object and distance information to the object, based on the light received by the light receiving unit, and
a dirt determination unit configured to detect dirt attached to the transmissive part, based on the point group information,
wherein the detection range to which the light emitting unit emits light is divided into a plurality of regions comprising a first region and a second region different from the first region,
wherein the dirt determination unit is configured to determine, for each region, that dirt is attached to the region when a number of pieces of the point group information that continues to be in an abnormal state, where the distance information cannot be normally acquired at the same time, for a predetermined time or longer reaches a predetermined number or more, and
wherein when the predetermined number for determining that dirt is attached in the first region is defined as a first threshold value and the predetermined number for determining that dirt is attached in the second region is defined as a second threshold value, the first threshold value is different from the second threshold value.

2. The sensor system according to claim 1, wherein the predetermined time for determining that dirt is attached in the first region is defined as a third threshold value and the predetermined time for determining that dirt is attached in the second region is defined as a fourth threshold value, the third threshold value is different from the fourth threshold value.

3. The sensor system according to claim 1 or 2, wherein the second region is a region corresponding to a road surface,
wherein the first region is a region other than the second region within the detection range of the LiDAR, and
wherein the first threshold value is larger than the second threshold value.

4. The sensor system according to claim 1 or 2, wherein the detection range is divided into two regions of the first region and the second region closer than the first region in an inward direction, and
wherein the first threshold value is larger than the second threshold value.

5. The sensor system according to claim 1 or 2, wherein the detection range is divided into three regions of a left region, a left-right central region, and a right region in a left and right directions,
wherein the left region and the right region correspond to the first region, and the left-right central region corresponds to the second region, and
wherein the first threshold value is larger than the second threshold value.

6. The sensor system according to claim 1, comprising:
a cleaner configured to clean dirt attached to the transmissive part, and
a cleaner control unit configured to control the cleaner,
wherein the sensor system is mounted on a vehicle comprising a vehicle control unit, and
wherein the cleaner control unit is configured to actuate the cleaner when a signal, which indicates that the vehicle is stationary, is acquired from the vehicle control unit.

7. The sensor system according to claim 3, wherein the sensor system is mounted on a vehicle, and
wherein the second region is a region whose vertical angle is 0 degree or less.

8. The sensor system according to claim 1 or 2, comprising:
a camera whose angle of view comprises a range comprising the detection range of the LiDAR, and
a region specifying unit configured to specify at least the first region and the second region based on information acquired by the camera.

9. The sensor system according to claim 8, wherein the region specifying unit is configured to specify, as the first region, a region corresponding to a road surface, based on an image acquired by the camera.
